# EUROPEAN PATENT APPLICATION

(11) **EP 0 544 016 A1**
(43) Date of publication of application: **02.06.1993**
(21) Application number: 92913209.0
(22) Date of filing: 18.06.1992
(51) Int. Cl.: H04M 1/272, G06K 1/12, H04M 1/274

(54) **PRINTER FOR IDENTIFICATION MARK**

(30) Priority: 18.06.1991 JP 146260/91
(71) Applicant: TORAY INDUSTRIES, INC., Tokyo 103 (JP)
(72) Inventor: ASADA, Hiroyoshi Taishi Shataku 402, Kawasaki-ku Kawasaki-shi Kanagawa 210 (JP); OKAMOTO, Miyoshi, Takatsuki-shi Osaka 569 (JP); ISHIWATARI, Toru Seien Ryo 15-1, Sonoyama 2-chome, Shiga 520 (JP)
(74) Representative: Coleiro, Raymond
(86) International application number: JP9200779
(87) International publication number: WO9222973

(57) **Abstract**

A printer for identification marks, having the function of converting a received voice signal to print it in an optically identifiable form as a bar code, and/or the function of automatic dialing. The printer has a receiving section for receiving the identifying information comprising the voice signal, a first converting section for converting the identifying information included in the received voice signal into the optically identifiable information, a printing section for printing the optically identifiable information, and a controlling means for controlling the respective operations of the receiving, first converting and printing section separately.

## Description

### TECHNOLOGICAL FIELD

This invention relates to a sound reception type identification mark printing device for printing an optical identification mark such as a bar code whose information input system is an acoustic coupling system, and to an identification mark printing device provided with an automatic dialing function.

### BACKGROUND OF THE INVENTION

An information input method generally used in printing devices is the one of inputting information through an accessary keyboard or scanner. On the other hand, in the case where information is input to the printing device from other apparatuses such as a computer, there is generally used a method of inputting the information through a suitable interface cable. The printing device and the input means are coupled electrically according to these methods, and thus the reliability of information transmission is high since noise is unlikely to be induced. However, the use of a small size portable printing device is very cumbersome since connecting of wires is required each time the printing device is connected to another apparatus. Further, since there are a variety of standards for connectors of interface cables, it is difficult to ensure universal usability. As a means to solve the cumbersomeness of carrying out the wiring each time the printing device is connected to another apparatus, it can be considered to transmit the information using a wireless method, but this is costly.

Telephone sets used in telephone communication and facsimile communication have required a dialing operation or button pushing operation in order to call another party.

In other words, an operator is required to carry out an input operation after confirming a telephone number from the operator's memory or looked up in a notebook, name card, telephone directory and the like. However, there have been many cases where the desired party cannot be called due to a lapse of memory, a mistake made in referring to the notebook, name card, telephone directory, and the like, or a mistake in the key operation and dialing operation. Particularly, older people frequently have problems reading telephone numbers written in small characters on a name card or in a telephone directory due to presbyopia or the like. There has been already proposed a so-called shortened dialing system in which a memory means is provided in a main telephone body so as to store telephone numbers. However, this system cannot be used when a telephone other than the one in which the telephone numbers are stored is used. Thus, this cannot fundamentally prevent the operational mistakes and input mistakes as described above.

In view of the above problems, there is proposed a telephone set capable of coding telephone numbers in the form of bar codes or the like, generating an electrical signal by reading the coded telephone number by means of a suitable scanner, and sending this electrical signal through a telephone line to call another party such as disclosed in Japanese Unexamined Patent Publication (Kokai) No. 61-10827, Japanese Unexamined Utility Model Publications (Kokai) Nos. 63-165949 and 1-72758.

Further, there is proposed an auto-dialer which is independent of the telephone set and realizes an automatic dialing function by inputting push button tones to a mouthpiece of the telephone set, such as disclosed in Japanese Unexamined Utility Model Publications (Kokai) Nos. 64-54455 and 1-88552. There is also proposed an automatic telephone number input system provided with a means for printing a bar code on a name card automatically in Japanese Unexamined Patent Publication No. 1-302948. However, this system cannot do away with the aforementioned strict confirming operation since the telephone numbers input through a dial or ten key built in the apparatus are printed into the bar codes.

However, in order to utilize this call transmitting and receiving mechanism sufficiently, there has been a problem that each user has to code the telephone numbers of parties that are frequently called into the bar codes personally as in a telephone number memorandum. On the other hand, in order for users to code telephone numbers into bar codes, there is normally required a computer system provided with a special bar code printing device or bar code generating function. This system is expensive and it takes a large amount of labor and time for users, unless they are experienced computer users, to become capable of utilizing this system. Further, even if users purchase a bar code printing device or computer system, and become capable of maneuvering the same, the strict confirming operation is still required when inputting the telephone numbers. Accordingly, the use of this system has not been widely implemented to date.

In order to utilize the aforementioned telephone set or automatic dialing apparatus sufficiently, an apparatus is required with which users are allowed to convert a telephone number easily into a display body including a bar code which can be scanned optically.

Accordingly, an object of the invention is to solve the aforementioned problems and to provide a printing device and a printing device provided with an automatic dialing function capable of converting a telephone number or facsimile number into a bar code symbol which can be dialed automatically, and printing an identification mark corresponding to the telephone number or the like conveniently, easily and reliably.

More specifically, the object of the invention is to solve the aforementioned problems and to provide a printing device capable of receiving a sound signal, converting the received information into an identification mark such as a bar code, and printing the same. Particularly, the object of the invention is to provide a printing device capable of converting a push button tone generated from a facsimile machine or a telephone set and printing the same.

Further, another object of the invention is to provide a printing device provided with a function of reading a telephone number represented by an identification mark through an optical reading unit, and dialing the read telephone number automatically.

### DISCLOSURE OF THE INVENTION

In order to accomplish the above objects, the invention adopts a basic technological construction as described below. Accordingly, an identification mark printing device of the invention comprises a receiving unit for receiving a sound signal including an identification information; a first converting unit for converting the identification information included in the received sound signal into an optically identifiable display body; a printing unit for printing the optically identifiable display body; and control means for controlling operations of the receiving unit, the first converting unit, and the printing unit individually.

In addition to the above construction, the identification mark printing device may comprise a reading unit for reading the identification information recorded in the optically identifiable display body; a second converting unit for converting the identification information read by the reading unit into a specified sound signal; and a transmitting unit for transmitting the converted identification information in the form of a sound signal.

### BRIEF DESCRIPTION OF THE DRAWINGS

Fig. 1 is a perspective view showing an exemplary construction of an identification mark printing device according to the invention;
Fig. 2 is a block diagram showing a basic construction of the identification mark printing device according to the invention;
Fig. 3 is a block diagram showing an exemplary specific construction of the identification mark printing device according to the invention;
Fig. 4 is a diagram showing examples of optically identifiable display bodies printed by the identification mark printing device according to the invention; and
Fig. 5 is a diagram showing examples of construction and use of an identification mark printing device provided with an automatic dialing function according to the invention.

### BEST MODE FOR EMBODYING THE INVENTION

A sound reception type identification mark printing device according to the invention is, specifically, characterized by a receiving unit for receiving a sound signal, a converting unit for converting the received information into an optical identification mark, and a printing unit for printing the optical identification mark on a label.

A specific example of the invention pertains to a sound reception type identification mark printing device characterized in that the converting unit is provided with a function of converting a push button signal.

Another specific example of the invention pertains to a sound reception type identification mark printing device characterized by a key input unit for allowing an input of cognitive information, and more particularly to a sound reception type identification mark printing device characterized by a cognitive information editing unit. Still another specific example of the invention pertains to a sound reception type identification mark printing device characterized by a received data processing unit for adding or deleting an outside line identification number to or from received identification information.

With the use of a recording paper on which the optically identifiable display body such as a bar code is printed by the apparatus of the invention, communication can be effected with a desired party immediately and accurately a desired number of times by causing the telephone set or automatic dialing apparatus disclosed in the aforementioned patent publications to read the bar code.

Hereafter, an exemplary construction of an identification mark printing device according to the invention is described with reference to the drawings.

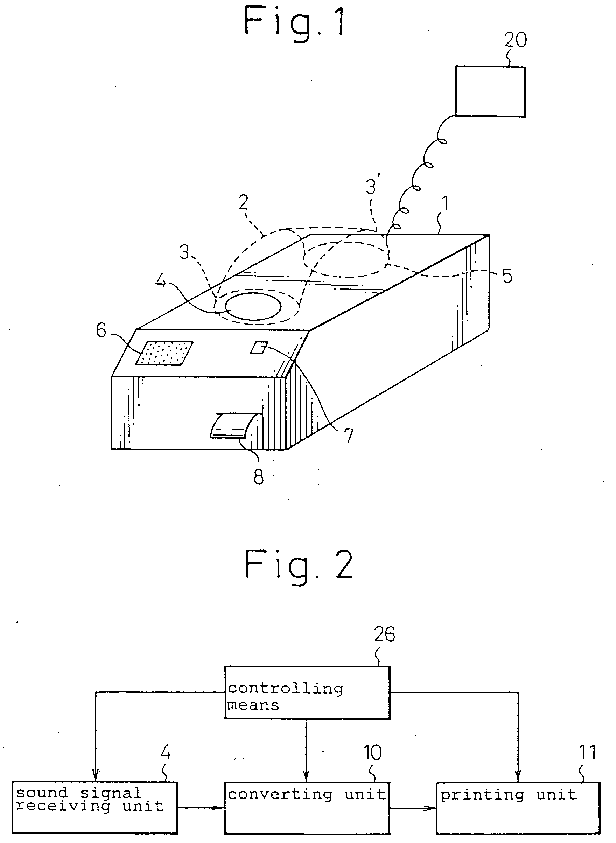

Fig. 1 is a schematic diagram showing the construction of a specific example of the identification mark printing device according to the invention. The illustrated apparatus is adapted to print a telephone number or facsimile number in the form of an optically identifiable display body such as a bar code.

More specifically, a telephone number printing device 1, which is an example of the identification mark printing device according to the invention, is connected to a handset 2 connected to a preinstalled telephone set or facsimile machine. When a number is dialed, the printing device 1 receives a sound signal from an earpiece 3 of the handset 2 at a sound signal receiving unit 4 via an acoustic coupler or the like, converts a dial signal of the telephone set or facsimile machine into, for example, a bar code and prints the same on a recording paper 8, or the like.

The telephone number is converted into a bar code by a conventional and normal dialing operation and the telephone line is connected by the dialing operation, thereby effecting a telephone call or communication. Accordingly, the telephone numbers can be input very accurately without reconfirmation. Further, by using the identification mark printing device according to the invention, a telephone directory, telephone memorandum, and card converted into bar codes, namely, a personal data base for the telephone numbers, can be easily constructed without any intentional effort.

A sound signal referred to in the invention is a sound signal from the receiver when the dialing operation is carried out in a conventional telephone set or the like. In other words, the sound signal refers to a dial pulse or push button tone. A dial pulse interrupts a loop current by the number dialed by opening and closing a dial contact, and a sound singal corresponding thereto is the dial pulse sound. Further, the push button tone is the one allotted to each of 12 buttons arranged 4 rows by 3 columns by combining two frequencies of low and high groups. The sound signal may also utilize a human voice.

The identification mark printing device according to the invention which permits an input by means of the sound signals is an apparatus capable of recording the telephone numbers by inputting the sound signals corresponding to the telephone numbers. Specifically, the receiver of the telephone set or the like is set in a sound signal input unit, and then a data corresponding to the telephone number is printed by operating the dial or push buttons of the telephone set or the like. In this case, since the interface with the telephone set is the sound signals, the printing device can be realized independently of the telephone set main body, thereby obviating the need to modify the preinstalled telephone set or facsimile machine. Further, even in the case where the input dialed through another telephone set is desired to be converted into a bar code, it can be easily done merely by setting a receiver of that telephone set in the sound signal input unit of the telephone number printing device according to the invention.

The bar codes referred to in the invention are those coded into bar code symbols, and a coding standard and the like are not particularly limited provided that the bar codes are optically readable.

The recording paper 8 having the bar code printed thereon can be effectively used with a suitable automatic dialing apparatus, or a telephone set and facsimile machine provided with the automatic dialing function proposed as in the aforementioned patent publications. The recording paper in the form of a label having adhesive applied to the underside thereof can be applied to a card such as a name card, a leaflet of a notebook or telephone directors, or the like. Thus, the telephone number bar codes can be added very easily to a personal data base accumulated thus far.

The above embodiment will now be described more in detail.

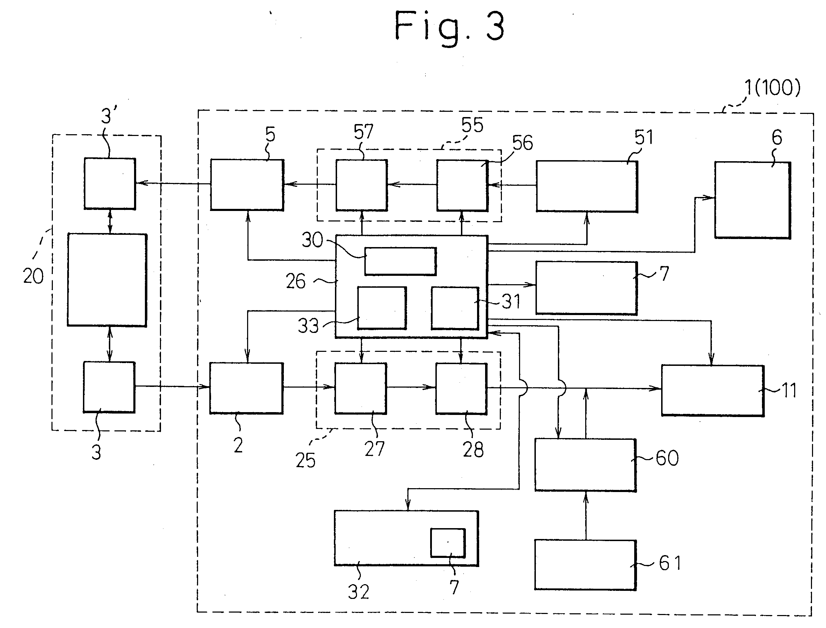

The identification mark printing device 1 shown in Fig. 1 is provided with the sound signal receiving unit 4, a code converting unit 10, and a printing unit 11 as shown in Fig. 2. The printing device 1 is further provided with a control means 12 including, for example, a microcomputer for controlling operations of the above elements individually or collectively.

The sound signal receiving unit 4 receives the push button tone from the earpiece 3 when the dialing operation is carried out in the main body of the telephone set or facsimile machine 20 through an acoustic coupler (not shown). The received push button tone is once converted into a specific electrical signal in the converting unit 10. Upon receipt of the output signal of the sound signal receiving unit 4, the converting unit 10 converts the received signal into an optically identifiable display body. The printing unit 11 prints on the recording paper 8 the optically identifiable display body such as a specified bar code based on the recognition result obtained in the converting unit 10. The printing unit 11 prints, for example, the bar code corresponding to the dialed telephone number on the recording paper 8. A broken line 7 in Fig. 7 indicates the handset 2 of the telephone set 20, thereby showing a state where the earpiece 3' of the handset 2 is set in the receiving unit 4 connected to the acoustic coupler or the like in using the identification mark printing device 1. In other words, a user can convert a telephone number into a bar code using the identification mark printing device 1 by a procedure of lifting the handset 2 of the telephone set 20, adjusting the earpiece 3' relative to the acoustic coupler or the like so as to set the handset 2, and carrying out the dialing operation in the telephone set main body.

The identification mark printing device main body 1 according to the invention is preferably provided with a temporary memory means 21 for storing the telephone number temporarily, a telephone number display unit 6 including a liquid crystal display means with which the sound signal reception result can be confirmed, and a print start switch 7 for determining whether the printing operation should be started. More specifically, the temporary memory means 21 is provided, and the telephone number is once displayed in the telephone number display unit 6 after the dialing operation, and the other end is finally confirmed by means of the telephone call. Thereafter, the print start switch 7 is operated if necessary. In other words, in the case where this number will be likely to be called frequently in the future, the print start switch 7 is operated to print the bar coded telephone number on the recording paper. With this arrangement, errors are less likely to occur and the personal data base can be constructed efficiently.

In the mode shown in Figs. 1 and 2, the sound signal receiving unit 4, the code converting unit 10, and the printing unit 11 are constructed integrally. There is, of course, no problem in constructing these elements as separate bodies in a suitable manner in the telephone number printing device according to the invention.

While the preferable embodiments of the invention are described hereinbefore, the effectiveness and scope of the invention are not limited by these embodiments. There will now be described in detail an exemplary specific construction of an identification mark printing device according to the invention with reference to a block diagram shown in Fig. 3.

The identification mark printing device shown in the block diagram of Fig. 3 is in relation to an identification mark printing device provided with an automatic dialing function to be described later which uses the optically identifiable display body. In Fig. 3, the identification mark printing device main body 1 and a telephone set or facsimile machine 20 connected acoustically with the printing device main body 1 constitute a system. The telephone set or facsimile machine 20 is provided, for example, with a handset 2 including an earpiece 3 and a mouthpiece 3'. The information represented by the dial tone or push button tone given when an arbitrary number is dialed in the telephone set or facsimile machine 20 is transmitted to the identification mark printing device 1 through the earpiece 3. The identification mark printing device 1 is basically provided with a sound signal receiving unit 4 which is coupled acoustically with the earpiece 3 and receives the information including the sound signal, a first converting unit 25 for converting identification information included in the received tone into an optically identifiable display body, a printing unit 11 for printing the optically identifiable display body, and a control means 26 for controlling operations of the sound signal receiving unit 4, the first converting unit 25, and the printing unit 11 individually.

As described above, according to the invention, the sound signal including the identification information may be a push button signal or may be a dial operation signal. Further, the tone may be a human voice.

It is preferable that the optically identifiable display body used in the invention is of a kind selected from the bar code, Karura code, two-dimensional code, OCR (Optical Character recognition), and the like.

Further, in the identification mark printing device 1 according to the invention, the sound signal receiving unit 4 preferably includes an acoustic coupler.

A tone source of the identification information received by the sound signal receiving unit 4 according to the invention is preferably the telephone set or facsimile machine 20 which gives the dial tone or the push button tone.

Moreover, in the identification mark printing device 1 according to the invention, the identification information carried by the sound signal is converted into a form which can be converted into a suitable optically identifiable display body in the converter 27. The converting operation is carried out in a converter 28 connected to the converter 27.

The converter 27 according to the invention is provided with a function of receiving the sound signal and converting the same into a specified digital code. As a specific example, a normal analog-to-digital converter is used.

On the other hand, the converter 28 is provided with a function of converting an output signal of the converter 27 into a specified code data for displaying the optically identifiable display body. It is preferable to constitute the first converting unit 25 by the converters 27 and 28.

According to the invention, the optically identifiable display body which is converted and output from the first converting unit 25 is printed on a suitable recording paper in the printing device 7.

Further, in the identifiable mark printing device 1 according to the invention, there is provided the control means 26 for administratively controlling the operations of the respective elements individually and collectively. The control means 26 includes, for example, a suitable microcomputer and a memory means 31 for storing a suitable program.

In another specific example of the identification mark printing device 1 according to the invention, the control means 26 is provided with a printing operation control means 32. The printing operation control means 32 includes a suitable keyboard or suitable switch mechanism.

In this specific example, in the case where the user wants to transmit information to a certain party using the specified telephone set or facsimile machine 20, a telephone set or facsimile machine of the other party is called after first confirming the telephone number or facsimile number thereof, then dialing or pushing the specific number. At this state, the identification information, namely the telephone number of facsimile number of the other party, is input to the receiving unit 4 through the earpiece 3 of the handset, and is coded into a suitable code representing the optically identifiable display body in the first converting unit 25.

In this case, in another specific example of the invention, there may be provided a suitable display means 6 such as a liquid crystal display means which is connected to the control means 26, so as to confirm the identification information by displaying the presently dialed telephone number or facsimile number of the other end temporarily in the display means 6.

Also, the telephone number or facsimile number of the other end is stored temporarily in the memory means 31 provided in the control means 26. After lapse of a predetermined period or an arbitrary period, the telephone number of facsimile number of the desired end is read from the memory 31, and is confirmed by means of the display means 6. Alternatively, the switch mechanism connected to the printing operation control means 7 is operated without confirming the number so as to print the identification information on the suitable recording paper 8 as an optically identifiable display body in the printing unit 11.

Of course, the invention may be constructed such that the telephone number or facsimile number of the other end is immediately printed on the suitable recording paper 8 as an optically identifiable display body at the time when it is dialed or pushed by means of push buttons.

Further, in the specific example of the invention, the control means 26 is preferably provided with a keyboard operating means 32 which is a key input unit for allowing the identification information to be input to the printing unit 11 which is the identification mark printing device.

Moreover, in the specific example of the invention, if the recording paper 8 having the optically identifiable display body such as a bar code printed thereon is merely output from the identification mark printing device 1, it becomes difficult in many cases to discriminate whose telephone number or facsimile number that bar code belongs to.

More specifically, in the above identification mark printing device 1, the identification information such as the telephone number is merely converted into the optically identifiable display body and is printed. Accordingly, to the user, it has been difficult to discriminate easily whose telephone number or facsimile number the mark, namely the optically identifiable display body mark, belongs to.

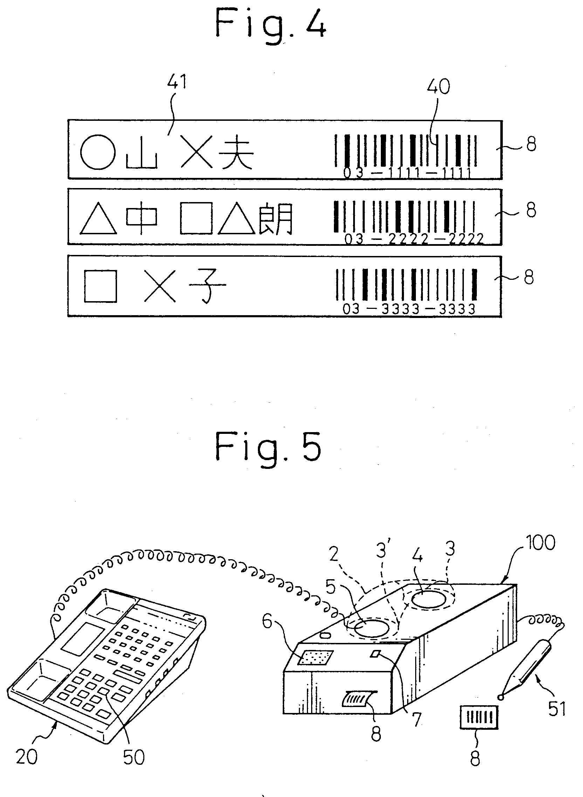

In order to solve the above problem, in the specific example of the invention, when the identification information converted into the optically identifiable display body is printed on the specified recording paper 8, not only the bar code which is one type of optically identifiable display body, but also a name, address, telephone number or facsimile number, and other necessary cognitive information are printed simultaneously as shown in Fig. 4.

The printing unit 11 provided in the identification mark printing device 1 according to the invention includes a printing means for printing the optically identifiable display body converted from the identification information and means for printing characters including numbers, letters, or the like. Further, the characters to be printed preferably include Chinese characters, Japanese characters (hiragana), square Japanese syllabary (katakana), alphabets, numbers, and generally used symbols.

In the above specific example, for example, the characters are stored as suitable coded information in the memory circuit 31 of the control means 26 and, at the same time, a program stored in the control means 26 which demonstrates a suitable editing function and word processing function is selected and executed by means of a key operation by the keyboard operating means 32. In this way, an optically identifiable display body 40 converted from the identification information and a name 41 of the other end can be printed by designing arbitrarily a spacing between the display body 40 and the name 41, the size of characters, or the size of the display body.

In such a case, the color used to print the data may be a single color, but the data may be printed in a combination of two or more colors.

In this case, it is possible to print the characters 41 in superimposition with the display body 40.

A printing mechanism used in the invention is not particularly limited, but it is preferable to use, for example, a thermal transfer type printing device which has a relatively simple construction and can be fabricated as a small size apparatus.

As examples of the editing function in this specific example, there can be considered the size, contraction scale, rotation, arrangement direction, sorting sequence, spacing, and the like of the optically identifiable display body 40 and the characters 41.

Further, the recording medium 8 on which the optically identifiable display body is printed in this specific example is preferably one selected from paper, film, cloth, and the like.

Further, it is preferable to apply adhesive to the underside of the recording medium 8.

In the above specific example of the invention, cognitive information other than the telephone number can be input as characters through the key input unit, and accordingly it becomes possible to print the name, company name, address, and the like of another party in addition to the identification mark. Thus, it can be confirmed very easily to whom the telephone number converted into the identification mark belongs.

Accordingly, the identification mark printing device 1 according to the invention is preferably provided with the control means 26 including a cognitive information editing unit 33 having a specified program therein.

The cognitive information editing unit 33 in this specific example is provided with a function of editing the letters and symbols input through the key input unit 32 or the telephone number information such as signals given from the telephone set. Thus, the cognitive information such as the name and the telephone number information converted into the identification mark can be edited suitably so as to be printed in such a manner that the user is allowed to confirm the printed data easily.

Further, the invention is preferably provided with a function of printing the information in two or more colors.

Accordingly, it becomes possible to print the telephone number information converted into the identification mark and the cognitive information by changing the color to be printed. Thus, the information can be printed such that the user is allowed to confirm the same more easily.

The form of the key input unit 32 in this specific example is not limited, but it is preferable to have the form of a generally used keyboard or the like. Further, the key input unit 32 is not necessarily provided in the printing device main body 1. The key input unit 32 may be connected to the main body through a suitable cord. Alternatively, the key input unit 32 may be constructed as an apparatus completely independent of the main body, and the information may be transmitted between the main body 1 and the unit 32 by a wireless means or other means. In addition, the main body may be provided with a suitable interface unit for connecting the key input unit 32 with the main body.

The function of printing the information in two or more colors in the invention can be easily realized by using a known method.

Further, the control means 26 of the printing device according to the invention may be additionally provided with a Chinese character converting function and a Japanese converting function which are used in a word processor or the like.

Also, an automatic transmitting apparatus according to the invention is preferably provided with the cognitive information editing unit 33. Using the cognitive information editing unit 33, for example, the bar codes can be printed in the telephone number information sections with heads thereof aligned as shown in Fig. 4 even when there is variation in the length of information such as names in the section 41 if a format is designated in advance. Thus, in the case where the printed labels 8 are applied to a notebook or the like, the bar codes on the respective labels can be read with improved ease since the heads of the bar codes are aligned. It is also possible to reverse the cognitive information sections 41 such as the names and the telephone number information sections 40 and to align the heads of the cognitive information sections 41. This can be accomplished by designating such a format as to maintain the length of an information section, such as the names, to be printed.

The important point of the invention is that the telephone number can be printed as an identification mark on a recording carrier by the normal dialing operation, that the other party is confirmed since the telephone line is connected by this dialing operation to thereby effect a telephone call or communication, and that the telephone number can be input very accurately without reconfirmation. Further, by utilizing the automatic dialing apparatus according to the invention, a telephone directory, telephone memorandum, or cards are converted into bar codes, namely, a personal data base for telephone numbers, can be easily constructed without any intentional effort.

In the case where the recording carriers on which the identification mark are printed are in the form of labels having adhesive applied to the undersides thereof, the recording carriers can be applied to cards such as conventional name cards, pages of a notebook or telephone directory, and the like. Thus, the telephone number bar codes can be added very easily to a personal data base accumulated thus far. A printing method adopted by the identification mark printing device according to the invention and materials for the recording carriers are not limited at all.

The sound reception type identification mark printing device 1 according to the invention is basically provided with a receiving unit for receiving a sound signal, a converting unit 10 for converting the received information into an identification mark, and a printing unit 11 for printing the identification mark on a label. With this basic construction, the sound signal is received and converted into the identification mark such as a bar code so as to be printed on the label 8. Since the information is transmitted by means of acoustic coupling, the need for extra wiring is obviated. If a speaker is provided at an information transmitting side and a microphone is provided at an information receiving side (printing device), the information can be transmitted without any particular need to match the standards, and thus the versatility can be improved remarkably.

Further, the converting unit is preferably provided with a function of converting the push button signal. With the sound reception type identification mark printing device 1, the push button signal (telephone number, facsimile number information) from a communication apparatus such as the telephone set 20 can be converted into an identification mark such as a bar code, and can be printed. Thus, this can be used as an identification mark printing device for use with an automatic dialing apparatus for reading an identification mark.

It is also preferable to provide a key input unit which allows an input of the cognitive identification information. As described above, the sound reception type printing device 1 of the invention can be used as the identification mark printing device for use with the automatic dialling apparatus. However, the telephone number or facsimile number information is merely converted into an optically identifiable display body and is printed. Accordingly, to the user, it is very difficult to confirm who the other party is. In view of this, the key input unit in another example of the invention is provided with a function of inputting the cognitive information. Provision of this function makes the printing device capable of printing identification information such as the name, company name, address, and the like of another party in addition to the identification mark. Therefore, it becomes possible to confirm very easily to whom the telephone number or the facsimile number converted into the identification mark belongs.

It is also preferable to provide an information editing unit. The information editing unit is provided with a function of editing the identification information input through the key input unit or the telephone number and facsimile number information given from a communication apparatus such as a telephone set. Thus, the cognitive information such as the name and the telephone number and facsimile number information converted into the identification mark can be edited suitably and can be printed so that the user is allowed to confirm the information easily.

The sound signals referred to in the invention are signals made by vibrations of medium such as air. The sound signals are not limited, but may be human voices or electronic sounds.

The cognitive information referred to in the invention includes numbers, letters (including alphabets), symbols, or the like. The cognitive information is not limited provided that it can be confirmed by the user.

As described above, the identification mark printing device 1 according to the invention is capable of printing accurately a telephone number or facsimile number dialed through a normal dialing operation in the telephone set 20 or facsimile machine 20' in the form of a bar code symbol, and is also realizable inexpensively since the preinstalled telephone set can be utilized as it is. Therefore, the invention is very effective in spreading the use of a variety of already proposed bar code automatic dialing systems.

There will be next described an identification mark printing device provided with an automatic dialing function, which is a second mode of the invention.

More specifically, the identification mark printing device according to the invention includes a reading unit for reading the identification information recorded in the optically identifiable display body, a second converting unit for converting the identification information read in the reading unit into a specified sound signal, and a transmitting unit for transmitting the converted identification information as a sound signal in addition to the construction of the aforementioned identification mark printing device 1.

Hereafter, there will be described a specific example of the identification mark printing device provided with the automatic dialing function according to the invention with reference to the drawings.

This specific example of the invention pertains to the identification mark printing device provided with the automatic dialing function which enables a dialing operation to be conducted reliably and automatically through the reading unit from a card such as a name card or a page of a telephone directory or address book on which a telephone number of facsimile number is printed so as to be optically readable. This identification mark printing device is also provided with a function of printing an identification mark very conveniently by the dialing operation of a normal telephone set or facsimile machine. This identification mark printing device is capable of using advantageously the automatic dialing function constructed such that the dialing operation is carried out automatically using the identification mark.

Fig. 5 is a perspective view showing an exterior of an embodiment of an identification mark printing device 100 according to the specific example of the invention.

A handset 2 (indicated by broken line in Fig. 5) of a preinstalled telephone set 20 or the like is lifted and set in a specified position on the automatic dialing apparatus 100. In this state, a mouthpiece 3' of the handset is coupled with a sound signal generating unit 5 of the automatic dialing apparatus 100, while an earpiece 3 thereof is coupled with a sound signal receiving unit 4 of the apparatus 100. In the case of a first call to a certain party, the dialing operation is carried out by maneuvering push buttons 50 of the telephone set main body. Sound signals emitted from the earpiece 3 of the handset 2 simultaneously with the dialing operation are received by the sound signal receiving unit 4, an identification mark corresponding to the telephone number (the sound signals), e.g. a bar code, is printed on a recording carrier 8 (bar code printing function). In this figure, a bar code label 8 is described. In the case of the second or subsequent call, the handset 2 is fixed in the above state, and the bar code label 8 obtained in the first call is read by a bar code reader 51. In this way, a sequence of dial tones corresponding to the telephone number recorded in the bar code is output from the dial tone generating unit 5 and is input to the mouthpiece 3' of the handset 2, thereby realizing an accurate and convenient dialing operation (automatic dialing function).

Exemplary constructions of the respective elements in the invention are described specifically hereinbelow. For example, the sound signal receiving unit 4 includes a microphone and a DTMF (Dual Tone Multi-Frequency) receiver IC. By means of the receiver IC, the push button tone can be converted into a digital electrical signal. Upon receipt of this signal, an identification mark printing mechanism including a bar code symbol generating circuit and a printing unit prints the bar code corresponding to the telephone number (the sound signals) on the recording carrier. A printing method adopted by the printing unit is not specifically limited. However, a thermal printing device which uses a heat sensitive label as a recording carrier is particularly advantageous in making the apparatus smaller size since this printing device can be realized with a very simple construction.

Next, the automatic dialing function 100 will be described specifically. For example, a bar code reader 51 of the pen type is characterized by its small size and low price. The pen type bar code reader 51 reads a difference in the reflectance ratio of a black bar to a space of the bar code printed on the recording carrier 8, and outputs an electrical signal representing the difference to a commercially available bar code decoder IC. The bar code decoder IC converts a content recorded in the bar code into a digital signal (character information). This digital signal is applied to a DTMF dialer IC, which sends a push button tone through a speaker serving as the sound signal generating unit 5.

It goes without saying that the operability of this printing device can be improved if there are provided a temporary memory means for storing telephone numbers temporarily, a telephone number display unit 6, a print start switch 7, and a redial switch 53. More specifically, with the bar code printing function, the telephone number received by the sound signal receiving unit 4 is stored in the temporary memory means 31, and is displayed in the telephone number display unit 6. At the same time, the other party is finally confirmed through a telephone call. Thereafter, the print start switch 7 is operated to print the bar coded telephone number on the recording carrier 8 if necessary, i.e., in the case where this number will be likely to be called frequently in the future. With this arrangement, errors are less likely to occur and the reliability is improved. With the automatic dialing function, the telephone number read by the bar code reader 51 is stored temporarily in the temporary memory means 31. If the sequence of dial tones can be transmitted again by operating the redial switch 53 when the telephone call or communication cannot be effected because of a busy line or other cause, the dialing operation can be carried out again even without carrying out the reading operation by means of the bar code reader 51 again, thereby improving the operability.

In the mode shown in Fig. 5, the pen type scanner is shown as the bar code reader 51. There is, of course, no problem in using as the bar code reader 51 a variety of already proposed bar code readers including a touch type scanner, a laser scanner, or a slot scanner.

While the preferable embodiments of the invention are described hereinbefore, the effectiveness and scope of the invention are not limited by these embodiments. Rather, the invention brings about the following applications and developments.

As described above, the automatic dialing apparatus according to the invention is capable of printing accurately a telephone number or facsimile number normally dialed in the telephone set or facsimile machine in the form of an identification mark and carrying out the dialing operation very conveniently using the identification obtained by the previous operation, and is also realizable inexpensively since a preinstalled telephone set or the like can be utilized. Thus, this automatic dialing apparatus can be used very effectively in telephone communication in any location such as offices and homes.

A second specific example of the invention is described with reference to Fig. 3 hereinafter. Specifically, the second converting unit 55 is described. The specified optically identifiable display body displayed on the recording paper, e.g., the bar code, is read by the reader 51 using a suitable scanner mechanism, and the read display body is converted into a suitable digital value using a specified program in a converter 56. Thereafter, the digital value is converted into a sound signal such as a push button signal by another converter 57. The converted signal is output from the sound signal generating unit 5, which is connected to the mouthpiece 3' of the handset 2 of the telephone set or facsimile machine through, for example, an acoustic coupler (not shown), so as to transmit the dial tones generated by the sound signal generating unit 5 to the telephone set or facsimile machine 20.

The converters 56 and 57 constitute the second converting unit 55 used in the invention.

There will next be described another specific example of the identification mark printing device 1 according to the invention.

In the case where an outside line is used in a place where a private branch exchange (hereinafter referred to as an exchange installation) such as a company, it is generally required to dial a telephone number while adding a number to connect a line with an outside line (generally "0" is often used, and this number is referred to as an "outside line identification number" hereinafter). Accordingly, in order to dial a telephone number automatically using the aforementioned automatic dialing apparatus in the exchange installation, it is necessary to provide an identification mark with the outside line identification number added. On the other hand, as a matter of course, it is necessary to provide the identification mark not including the outside line identification number outside the exchange installation.

In other words, in the case where the telephone number is dialed automatically in two places: (1) outside the exchange installation and (2) within the exchange installation, the following problem has existed. In this case, even if the telephone call is made to the same party, it is necessary to provide two identification marks:
(1) original telephone number only,
(2) outside line identification number (number such as "0") + original telephone number.

In view of this problem, another specific example of the invention shows an identification mark printing device 1 constructed such that two kinds of identification marks: (1) original telephone number only, and (2) outside line identification number (number such as "0") + original telephone number, can be printed easily.

The specific example of the invention to be described below includes a received data processing unit 60 for processing a received telephone number data and a changeover switch 61 for controlling the received data processing unit, in addition to the basic construction of the identification mark printing device 1 shown in Fig. 3.

The received data processing unit 60 is provided with a function of adding or deleting the outside line identification number to or from the received telephone number data which is one type of identification information. For instance, it is assumed that the telephone number is dialed in the exchange installation and that the identification mark corresponding to the dialed telephone number is printed. Since the outside line identification number is added to the original telephone number in the identification mark, the automatic dialing operation cannot be carried out outside the exchange installation. The received data processing unit 60 is provided with the function of deleting the outside line identification number from the received telephone number data in this case. Thus, even if the dialing operation is carried out while adding the outside line identification number, an identification mark having the outside line identification number deleted therefrom can be printed and accordingly the dialing operation can be carried out outside the exchange installation. Of course, in the case where the automatic dialing operation is carried out in the exchange installation, the received telephone number data is converted into a corresponding signal without being processed to print the identification mark. This can be accomplished by switching the changeover switch 61 to specify whether or not the outside line identification number should be deleted from the received telephone number data.

Alternatively, it is possible to print two kinds of identification marks: (1) original telephone number only, and (2) outside line identification number + original telephone number, by carrying out a similar operation even when the dialing operation is carried out outside the exchange installation. However, in this case, the received data processing unit processes the received telephone number data by adding the outside line identification number thereto.

The telephone number code printing apparatus of this specific example thus constructed demonstrates an outstanding effect. Specifically, it does not matter whether the dialing operation is carried out in or outside the exchange installation, and this apparatus is capable of easily printing two kinds of identification marks: an identification mark (original telephone number only) when the automatic dialing operation is carried out outside the exchange installation, and another identification mark (outside line identification number + original telephone number) when the automatic dialing operation is carried out in the exchange installation.

There will be next described a case where the dialing operation is carried out outside the exchange installation. It is assumed that the telephone number of the other party is "0775-12-3456" and the outside line identification number is "0". First of all, the dialing operation is carried out normally.

The signal receiving unit 4 receives the push button signal from the earpiece 3 of the telephone set 20. The received telephone number data is "0775123456". In the case where the identification mark is necessary for automatic dialing in the exchange installation, the changeover switch 61 is operated so as to set an outside line identification number adding mode, and the print start switch 7 is pressed. The received data processing unit 60 adds the outside line identification number to the received telephone number data and converts the same into the corresponding identification mark, which is then printed in the printing unit 11. The telephone number data included in the printed identification mark is "00775123456".

In the case where the identification mark is necessary for automatic dialing outside the exchange installation, the changeover switch 61 is operated so as to set a neutral mode, and the print start switch 7 is pressed. The received data processing unit 60 converts the received telephone number data into the corresponding identification mark without processing the same, and the converted identification mark is printed in the printing unit 11. The telephone number data included in the printed identification mark is "0775123456".

As described above, the identification mark printing device in this specific example includes the received data processing unit 60 for, for example, adding or deleting the outside line identification mark to or from the received telephone number data. Accordingly, it does not matter whether the dialing operation is carried out in or outside the exchange installation, and this apparatus is capable of easily printing two kinds of identification marks: an identification mark (original telephone number only) when the automatic dialing operation is carried out outside the exchange installation, and another identification mark (outside line identification number + original telephone number) when the automatic dialing operation is carried out in the exchange installation.

## Claims

1. An identification mark printing device comprising:
a receiving unit for receiving a sound signal including identification information;
a first converting unit for converting the identification information included in the received sound signal into an optically identifiable display body;
a printing unit for printing the optically identifiable display body; and
control means for controlling operations of the receiving unit, the first converting unit, and the printing unit individually.

2. An identification mark printing device according to claim 1 wherein a push button signal is used as a sound signal including the identification information.

3. An identification mark printing device according to claim 1 wherein a human voice is used as a tone including the identification information.

4. An identification mark printing device according to claim 1 wherein the optically identifiable display body is one selected from a bar code, a Karura code, a two-dimensional code, an OCR code, and the like.

5. An identification mark printing device according to any one of claims 1 to 4, wherein the receiving unit includes an acoustic coupler.

6. An identification mark printing device according to any one of claims 1 to 4 wherein a tone source for the identification information received by the receiving unit is a telephone set or facsimile machine which generates a dial Rulce or push button signal.

7. An identification mark printing device according to any one of claims 1 to 4 further comprising:
a reading unit for reading the identification information recorded in the optically identifiable display body;
a second converting unit for converting the identification information read by the reading unit into a specified sound signal; and
a transmitting unit for transmitting the converted identification information in the form of the sound signal.

8. An identification mark printing device according to claim 7 wherein the sound signal into which the identification information is converted in the second converting unit is a push button signal.

9. An identification mark printing device according to claim 8 wherein the transmitting unit includes an acoustic coupler.

10. An identification mark printing device according to any one of claims 1 to 9 wherein the control means includes a key input unit for allowing the identification information to be input to the identification mark printing device.

11. An identification mark printing device according to any one of claims 1 to 9 wherein the printing unit includes printing means for printing the optically identifiable display body converted from the identification information and means for printing characters including numbers and letters.

12. An identification mark printing device according to claim 11 wherein the characters include Chinese characters, Japanese characters (hiragana), square Japanese syllabary (katakana), alphabets, numbers and generally used symbols.

13. An identification mark printing device according to claim 12 wherein the control means includes a key input unit for executing an editing function in the case where the optically identifiable display body, or the optically identifiable display body in combination with the characters is printed.

14. An identification mark printing device according to any one of claims 1 to 4, and 13 further comprising a received data processing unit provided with a function of adding or deleting an outside line identification number to or from the information received from the receiving unit.

15. An identification mark printing device according to any one of claims 1 to 14 wherein the identification information displayed in the optically identifiable display body is one selected from a telephone number, a facsimile number, and the like.

16. A printing method for use in an identification mark printing device comprising:
a first step of receiving a sound singal including identification information;
a second step of converting the identification information included in the received sound signal into an optically identifiable display body; and
a third step of printing the optically identifiable display body.

17. A printing method for use in the identification mark printing device according to claim 16 wherein a push button signal is used as a sound signal including the identification information.

18. An automatic dialing method as claimed in claim 16, further comprising:
a fourth step of reading the identification information recorded in the optically identifiable display body;
a fifth step of converting the identification information read in the fourth step into a specified sound signal;
a sixth step of transmitting the converted identification information in the form of the sound signal; and
a seventh step of operating an automatic dialing mechanism in accordance with the sound signal.

19. An automatic dialing method according to claim 18 wherein the sound signal into which the identification information is converted in the fifth step is a push button signal.
